# EUROPEAN PATENT APPLICATION

(11) **EP 4 851 471 A1**
(43) Date of publication of application: **09.12.2026**
(21) Application number: 26179101.6
(22) Date of filing: 18.05.2026
(51) Int. Cl.: F16C 11/06, F16C 11/08, F16C 11/10, F16M 11/14

(54) **BALL JOINT MECHANISM AND BALL HEAD**

(30) Priority: 23.05.2025 CN 202510675689; 23.03.2026 CN 202610352935; 30.03.2026 CN 202610402870
(71) Applicant: Xiang, Fan, Hengyang City Hunan 421001 (CN)
(72) Inventor: Xiang, Fan, Hengyang City Hunan 421001 (CN)
(74) Representative: Petraz, Gilberto Luigi

(57) **Abstract**

Provided are a ball joint mechanism and a ball head. The ball joint mechanism includes a ball and a housing configured to accommodate the ball, where the ball is internally provided with an accommodation chamber extending axially; the accommodation chamber is internally provided with an adjusting member, a spring, and an abutting member in sequence from top to bottom; under an elastic force of the spring, the abutting member is exposed from an opening of the accommodation chamber to an outer surface of the ball; an inner bottom of the housing is provided with a curved seat; the curved seat is provided with a concave surface in contact with and mated to the abutting member; and the concave surface and the outer surface of the ball enclose a crescent-shaped gap that gradually narrows from a center to a peripheral edge. Since the spring and the abutting member are disposed inside the ball and the curved seat is provided with the concave surface mated with a spherical surface of the abutting member, the ball is elastically supported to rotate flexibly and smoothly.

## Description

### TECHNICAL FIELD

The present disclosure relates to the technical field of ball joints, and in particular to a ball joint mechanism. In addition, the present disclosure further relates to a ball head including the ball joint mechanism.

### BACKGROUND TECHNOLOGY

As a common mechanical structure, a ball joint enables an object disposed thereon to move freely in a three-dimensional space for horizontal rotation, forward/backward swing, and left/right swing. For example, a ball head configured to mount a still camera or a video camera is a typical ball joint. The ball joint typically includes a housing with a spherical mounting groove and a ball, and the ball is movably disposed inside the housing.

Conventional ball heads have a common problem in practical use. That is, when the ball is deflected and locked, the ball is not locked immediately. Affected by the gravity of the device disposed on the ball, the ball often continues to slowly slip by a certain angle toward its deflection direction (which is commonly known as the "nod phenomenon" in the industry).

The Chinese Patent Application No. 2023219062485 discloses a self-return ball joint mechanism, which includes a ball and a housing configured to accommodate the ball. An upper portion of the ball is provided with a vertical ball shank, and the housing is internally provided with a ball support, a spring, and a support member. The ball support is configured to support the ball, and the support member provides elastic support for the ball support via the spring. A lower portion of the ball is provided with a horizontal tangent plane, and an upper surface of the ball support is a flat surface, where the upper surface of the ball support is in contact or not in contact with the lower portion of the ball. Thus, the ball experiences high damping resistance during rotation, and can automatically return to a position. However, the ball support in such a ball joint mechanism is prone to sticking, leading to unsmooth rotation of the ball. In addition, an elastic structure needs to be disposed between the ball and the housing, resulting in that the overall structure is not compact and has a large volume.

### CONTENT OF THE INVENTION

The present disclosure provides a ball joint mechanism and a ball head, so as to solve the technical problems of easy sticking during rotation, insufficiently compact overall structure, and large volume of an existing ball joint mechanism.

An aspect of the present disclosure provides a ball joint mechanism, including: a ball and a housing configured to accommodate the ball, where the ball is internally provided with an accommodation chamber extending axially; the accommodation chamber is internally provided with an adjusting member, a spring, and an abutting member in sequence from top to bottom; under an elastic force of the spring, the abutting member is exposed from an opening of the accommodation chamber to an outer surface of the ball; an inner bottom of the housing is provided with a curved seat; the curved seat is provided with a concave surface in contact with and mated to the abutting member; and the concave surface and the outer surface of the ball enclose a crescent-shaped gap that gradually narrows from a center to a peripheral edge.

In the above technical solution, since the spring and the abutting member are disposed inside the ball and the curved seat is provided with a concave surface mated to the spherical surface of the abutting member, the ball is elastically supported to rotate flexibly and smoothly. Since the crescent-shaped gap with a deep center and a shallow edge is formed between the concave surface and the outer surface of the ball, the contact pressure between the abutting member and the edge of the concave surface is greater than that between the abutting member and the center of the concave surface. When the ball is deflected to different angles, the contact position between the abutting member and the concave surface of the curved seat changes, such that the exposure amount of the abutting member relative to the outer surface of the ball changes accordingly, and the compression amount of the spring varies. Therefore, the elastic force generated by the spring dynamically increases or decreases with the change of the deflection angle of the ball, such that the rebound force and friction force of the ball during deflection change dynamically. When it is necessary to adjust the damping force, only a tool is required to move an adjusting screw plug upward or downward, thereby changing the elastic force of the spring.

In an embodiment, the abutting member is cylindrical in a circumferential direction, and an end surface of an exposed end of the abutting member is a spherical surface.

In an embodiment, the abutting member is spherical. Rolling contact is formed between the spherical abutting member and the concave surface of the curved seat, which further improves the rotation smoothness and wear resistance, and reduces the occurrence of sticking.

In an embodiment, the abutting member includes a cylindrical member and an abutting ball, and the cylindrical member is provided with a groove configured to accommodate the abutting ball. The cylindrical member can better cooperate with the spring, and enables the abutting ball to expose more outward relative to the outer surface of the ball on the other hand, so as to adapt to a crescent-shaped gap with a relatively deeper central size.

In an embodiment, the concave surface is provided with a central shallow groove. The central shallow groove can better guide the ball to center accurately.

In an embodiment, the accommodation chamber is internally provided with a guide sleeve, and the abutting member is slidably disposed inside the guide sleeve. The guide sleeve improves surface smoothness and wear resistance.

In an embodiment, an upper portion of the ball is provided with a ball shank; the ball shank is provided with an axial through hole; and one end of the axial through hole is open at a top end of the ball shank, and the other end of the axial through hole is connected to the accommodation chamber, such that an external adjusting tool is allowed to enter the axial through hole to operate the adjusting screw plug.

In an embodiment, an upper portion of the ball is provided with a ball shank; the ball shank is provided with an axial through hole connected to the accommodation chamber; the axial through hole is internally provided with an adjusting rod; the adjusting rod is provided with a head portion and a rod portion; the head portion of the adjusting rod protrudes from an end surface of the ball shank; the end surface of the ball shank is provided with a fixing cover configured to cover the head portion of the adjusting rod; the fixing cover limits axial movement of the adjusting rod via a screw connected to the ball shank; an outer periphery of the fixing cover is provided with a radial threaded hole and a limit screw to lock circumferential rotation of the adjusting rod; an upper end surface of the head portion of the adjusting rod is provided with a threaded hole for mounting a quick-release plate seat; the rod portion of the adjusting rod passes through the axial through hole and is threadedly connected to the adjusting member; a circumferential limiting structure is disposed between the adjusting member and the accommodation chamber; and the adjusting member is movable linearly up and down in the accommodation chamber when the adjusting rod is rotated. When it is necessary to adjust the damping force, only the limit screw needs to be loosened, and then the adjusting rod is rotated to move the adjusting member upward or downward, thereby changing the elastic force of the spring.

In an embodiment, a side of an upper end of the housing is provided with a U-shaped notch configured to avoid the ball, and a rubber pad is disposed between contact surfaces of the housing and the ball. The U-shaped notch facilitates the 90° deflection of the ball relative to the housing.

In an embodiment, a bottom of the housing is integrated with a rotating base and a base fixing knob.

Another aspect of the present disclosure further provides a ball head, including the ball joint mechanism.

The present disclosure has the following beneficial effects:
1) A stopping function is provided to improve operational stability.

Stable stopping at any position without locking is achieved to avoid uncontrolled tilting. Due to the crescent-shaped gap with a deep center and a shallow edge between the curved seat and the ball, the damping force between the curved seat and the ball is minimized when the ball is in the centered state, and the damping force gradually increases when the ball is deflected in any direction. When the ball is deflected, the abutting member moves to a shallower side of the gap following the ball, and the concave surface of the curved seat forces the abutting member to retract inward and compress the spring. Thus, the elastic force of the spring increases, and the rebound force of the ball acting on the curved seat via the spring and the abutting member increases correspondingly, such that the ball tends to reset and fits closely with the housing to increase the friction force between them. A larger deflection angle of the ball leads to a greater rebound force and friction force generated. After the device such as a camera is disposed on the ball and the corresponding stiffness of the spring is adjusted, the ball can be deflected to any angle and then released. Under the mutual cooperation of the spring, the abutting member, and the curved seat, the rebound force between the ball and the curved seat, the friction force between the ball and the rubber pad, and the friction force between the abutting member and the curved seat balance the gravity of the external device, thereby achieving stable stopping of the ball at any position without locking. That is, the ball can maintain balance and achieve an immediate stable stop at any time and in any position within the three-dimensional motion space for horizontal rotation, forward/backward swing, and left/right swing, thereby preventing uncontrolled downward tilting of the ball caused by the gravity of the external device.

The "nod phenomenon" is structurally eliminated. Benefiting from the crescent-shaped gap with a deep center and a shallow edge between the curved seat and the ball, under the cooperation of the spring, the abutting member, and the curved seat, the damping force between the ball and the curved seat increases as the ball is deflected away from the center. This fundamentally solves the problem that a ball head cannot be locked immediately and continues to slowly tilt by a certain angle toward the deflection direction due to the gravity of the device disposed on the ball, which is defined as the "nod phenomenon" in the industry. The ball can maintain balance at any position within the motion space and achieve stable stopping without locking a locking knob, thoroughly eliminating the nod phenomenon from the structural level.

Looseness and wobble are prevented. The structure eliminates the jerky motion, as well as the structural play and wobble that are easily generated at the central position in a conventional ball joint, improves positioning accuracy and stability, and is especially suitable for scenarios requiring high stability such as a ball head.

2) Stepless and accurate adjustment of the damping force is achieved to extend service life.

Adaptability to different loads is achieved. According to devices with different weights such as still cameras, video cameras or lamps, the pre-tightening force of the spring can be adjusted by operating the adjusting member to achieve personalized experience of flexibility under light load and stability under heavy load without replacing a part.

Elastic fatigue compensation is achieved. After long-term use of a conventional ball joint, plastic deformation of the spring leads to a decreased damping force. In the present disclosure, by operating the adjusting member, the compression amount of the spring is re-increased to restore the initial damping force, which significantly extends the service life of the product.

The adjustment operation is convenient. The adjustment process is simple and intuitive, and maintenance can be completed without disassembling the entire mechanism.

The present disclosure may have other objectives, features, and advantages in addition to those described above. The present disclosure will be further described below in detail with reference to the drawings.

### DESCRIPTION OF THE DRAWINGS

The accompanying drawings which constitute a part of the description of the present disclosure are intended to provide further understanding of the present disclosure. The exemplary embodiments of the present disclosure and descriptions thereof are intended to be illustrative of the present disclosure and do not constitute an undue limitation of the present disclosure. In the drawings:
FIG. 1 is a cross-sectional view of a ball in a centered state according to Embodiment 1 of the present disclosure;
FIG. 2 is a cross-sectional view of the ball in a tilted state according to Embodiment 1 of the present disclosure;
FIG. 3 is a top view of a ball joint mechanism according to Embodiments 2, 3, and 4 of the present disclosure;
FIG. 4 is a cross-sectional view of a ball in a centered state according to Embodiment 2 of the present disclosure;
FIG. 5 is a cross-sectional view of the ball in a tilted state according to Embodiment 2 of the present disclosure;
FIG. 6 is a cross-sectional view of the ball in a 90° tilted state according to Embodiment 2 of the present disclosure;
FIG. 7 is a cross-sectional view of a ball in a centered state according to Embodiment 3 of the present disclosure;
FIG. 8 is a cross-sectional view of the ball in a tilted state according to Embodiment 3 of the present disclosure;
FIG. 9 is a cross-sectional view of the ball in a 90° tilted state according to Embodiment 3 of the present disclosure;
FIG. 10 is a cross-sectional view of a ball in a centered state according to Embodiment 4 of the present disclosure;
FIG. 11 is a cross-sectional view of the ball in a tilted state according to Embodiment 4 of the present disclosure;
FIG. 12 is a cross-sectional view of the ball in a 90° tilted state according to Embodiment 4 of the present disclosure;
FIG. 13 is an overall top view of a ball joint mechanism according to Embodiment 5 of the present disclosure;
FIG. 14 is an overall cross-sectional view of the ball joint mechanism according to Embodiment 5 of the present disclosure;
FIG. 15 is a cross-sectional view of a ball according to Embodiment 5 of the present disclosure;
FIG. 16 is a top view of the ball according to Embodiment 5 of the present disclosure;
FIG. 17 is a bottom view of the ball according to Embodiment 5 of the present disclosure;
FIG. 18 is a cross-sectional view of an adjusting rod according to Embodiment 5 of the present disclosure;
FIG. 19 is a top view of the adjusting rod according to Embodiment 5 of the present disclosure;
FIG. 20 is a cross-sectional view of a fixing cover according to Embodiment 5 of the present disclosure; and
FIG. 21 is a top view of the fixing cover according to Embodiment 5 of the present disclosure.

### Reference Numerals:

1. ball; 2. housing; 3. rubber pad; 4. rotating base; 5. base fixing knob; 6. adjusting member; 7. spring; 8. abutting member; 8a. cylindrical member; 8b. abutting ball; 9. curved seat; 10. guide sleeve; 11. central shallow groove; 12. adjusting rod; 13. limit screw; 14. screw; 15. axial groove; 16. fixing cover; 17. quick-release plate seat; 18. epicycloidal tooth; and 19. limiting protrusion.

### SPECIFIC IMPLEMENTATIONS

To make the objectives, technical solutions, and advantages of the present disclosure clearer, the present disclosure is further described below with reference to the drawings and specific embodiments. It should be understood that the specific embodiments described herein are only intended to explain the present disclosure, rather than to limit the present disclosure.

### Embodiment 1

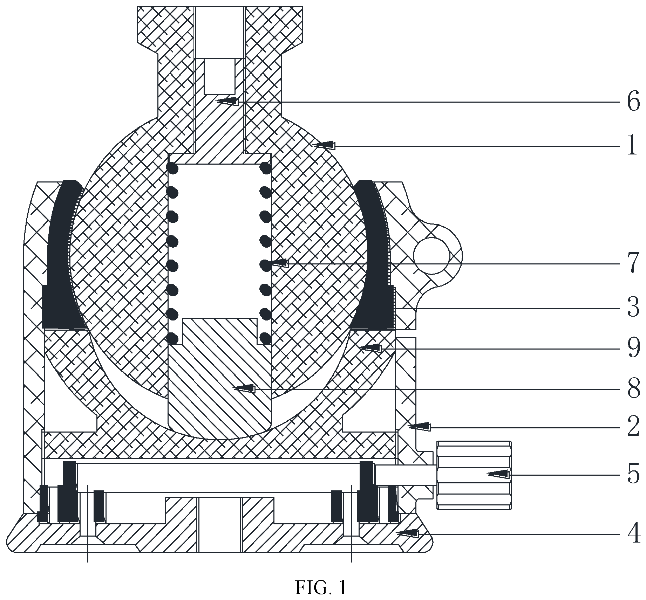

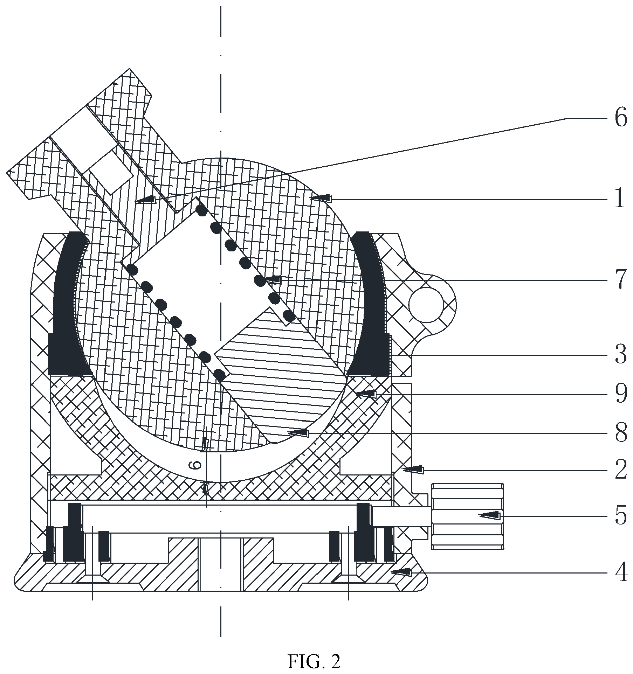

As shown in FIGS. 1 and 2, a compact ball joint mechanism includes ball 1 and housing 2 configured to accommodate the ball 1. Rubber pad 3 is disposed between the housing 2 and the ball 1. An upper portion of the ball 1 is provided with a ball shank. A bottom of the housing 2 is provided with rotating base 4 and base fixing knob 5. The ball 1 is a solid structure. The ball 1 is provided with a stepped through hole corresponding to the ball shank. The stepped through hole includes a threaded-hole section and a plain-hole section. An opening of the threaded-hole section faces upward and is located on the ball shank, and an opening of the plain-hole section faces downward and is located on a spherical surface of the ball 1. The stepped through hole is internally provided with adjusting member 6, spring 7, and abutting member 8 in sequence from top to bottom. The adjusting member 6 is an adjusting screw plug. The adjusting member 6 includes one portion cooperating with the threaded-hole section and another portion located inside the plain-hole section. An upper end surface of the adjusting member 6 is provided with a polygonal blind hole. The abutting member 8 is cylindrical in a circumferential direction. Under an elastic force of the spring 7, an outer end of the abutting member 8 extends outward from the opening of the plain-hole section, and an end surface of the exposed end of the abutting member 8 is a spherical surface. A lower portion of the housing 2 is provided with curved seat 9. The curved seat 9 is provided with a pot-shaped concave surface, and an outer end surface of the abutting member 8 is an arc surface in contact with and mated to the concave surface of the curved seat 9. A curvature of the concave surface of the curved seat 9 is greater than or equal to the spherical curvature of the ball 1. A crescent-shaped gap is formed between the concave surface of the curved seat 9 and an outer surface of the ball 1, and a central gap of the crescent-shaped gap is preferably 6 mm. From the perspective of a cross-sectional structure, as long as the crescent-shaped gap can be formed between the concave surface of the curved seat 9 and the outer surface of the ball 1, a profile of the concave surface of the curved seat 9 can be a circular arc or an elliptical arc.

In this embodiment, the adjusting member 6, the spring 7, and the abutting member 8 are disposed inside the solid ball 1, and the curved seat 9 with a concave surface is disposed on the lower portion of the ball 1. Under the elastic force of the spring 7, the outer spherical surface of the abutting member 8 is in contact with and mated to the concave surface of the curved seat 9, such that the ball 1 is elastically supported. The ball 1 experiences high damping resistance during rotation and rotates smoothly. When it is necessary to increase the damping force, only the adjusting member 6 needs to be tightened downward to increase a pre-tightening force of the spring 7.

Since the crescent-shaped gap is formed between the concave surface of the curved seat 9 and the outer surface of the ball 1, the damping force between the ball 1 and the curved seat 9 is minimized when the ball 1 is in a centered state, and the damping force between the ball 1 and the curved seat 9 gradually increases when the ball 1 is rotated to make the ball shank tilt in any direction.

When the ball 1 is deflected, the abutting member 8 moves to a shallower side of the gap following the ball 1, and the concave surface of the curved seat 9 forces the abutting member 8 to retract inward and compress the spring 7. Thus, the elastic force of the spring 7 increases, and a rebound force of the ball 1 acting on the curved seat 9 via the spring 7 and the abutting member 8 increases correspondingly, such that the ball 1 tends to reset and fits closely with the housing 2 to increase the friction force between them. A larger deflection angle of the ball 1 leads to greater rebound force and friction force. After an external device such as a camera is mounted on the ball 1 and a corresponding stiffness of the spring 7 is adjusted, the ball 1 can be deflected to any angle and then released. Under the mutual cooperation of the spring 7, the abutting member 8, and the curved seat 9, the rebound force between the ball 1 and the curved seat 9 and the friction force between the ball 1 and the housing 2 balance the gravity of the external device, thereby achieving stable stopping of the ball 1 at any position without locking, and preventing uncontrolled downward tilting of the ball 1 caused by the gravity of external device.

### Embodiment 2

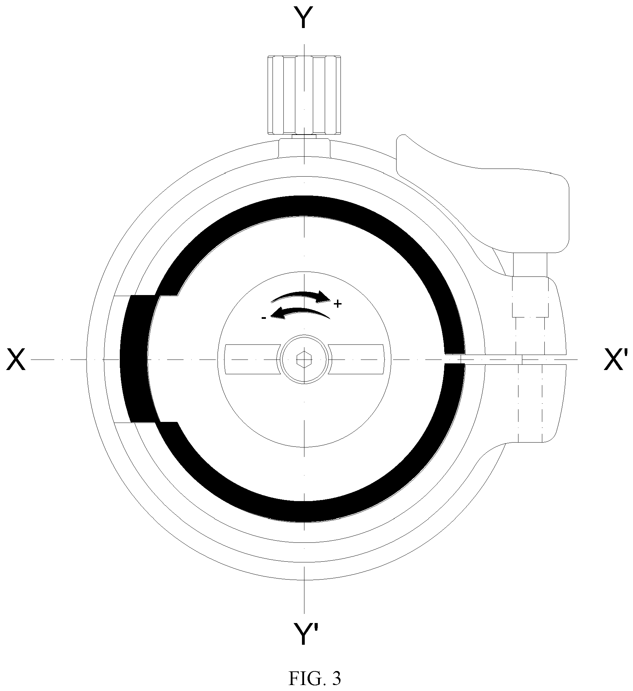

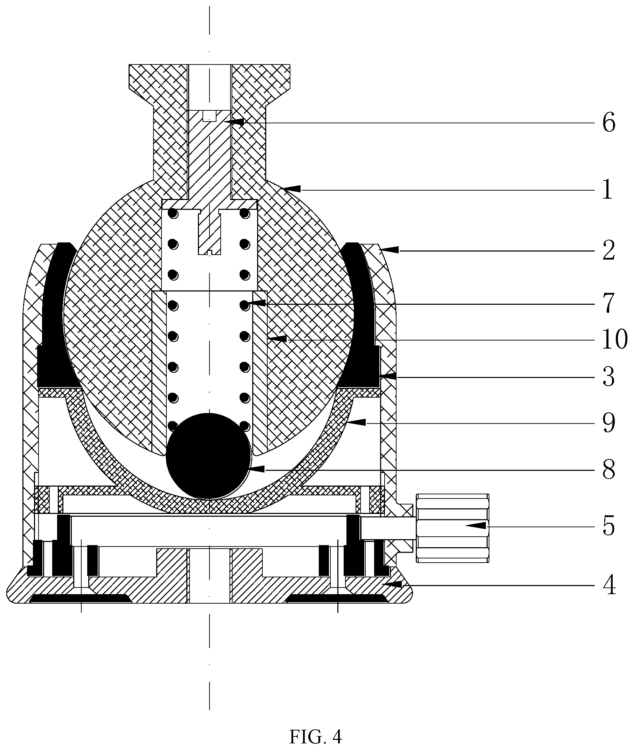

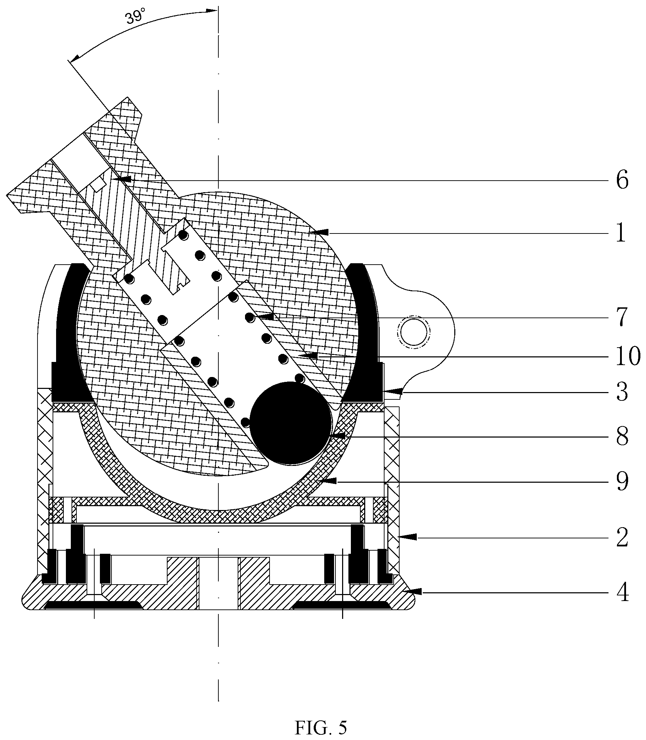

As shown in FIGS. 3 to 6, a ball joint mechanism includes ball 1 and housing 2 configured to accommodate the ball 1. The ball 1 is internally provided with an accommodation chamber extending axially. The accommodation chamber is internally provided with adjusting member 6, spring 7, and abutting member 8 in sequence from top to bottom. The abutting member 8 is spherical, and the abutting member 8 is able to expose from an opening at a first end of the accommodation chamber to an outer surface of the ball 1. An inner lower portion of the housing 2 is provided with curved seat 9. The curved seat 9 is provided with a pot-shaped concave surface mated to the abutting member 8. A crescent-shaped gap with a deep center and a shallow edge is formed between the concave surface and the outer surface of the ball 1. A compression amount of the spring 7 is changeable by operating the adjusting member 6, so as to adjust a contact pressure between the abutting member 8 and the concave surface of the curved seat 9. To improve surface smoothness and wear resistance, guide sleeve 10 is disposed inside the accommodation chamber, and the abutting member 8 is slidably disposed inside the guide sleeve 10.

An upper portion of the ball 1 is provided with a ball shank. The ball shank is provided with an axial through hole. One end of the axial through hole is open at a top end of the ball shank, and the other end of the axial through hole is connected to the accommodation chamber, such that an external adjusting tool is allowed to enter the axial through hole to operate the adjusting member 6. An inner wall of the axial through hole is provided with an internal thread, and an outer surface of the adjusting member 6 is provided with an external thread mated to the internal thread. An end of the adjusting member 6 is provided with a tool engagement portion, and the tool engagement portion is a hexagonal groove.

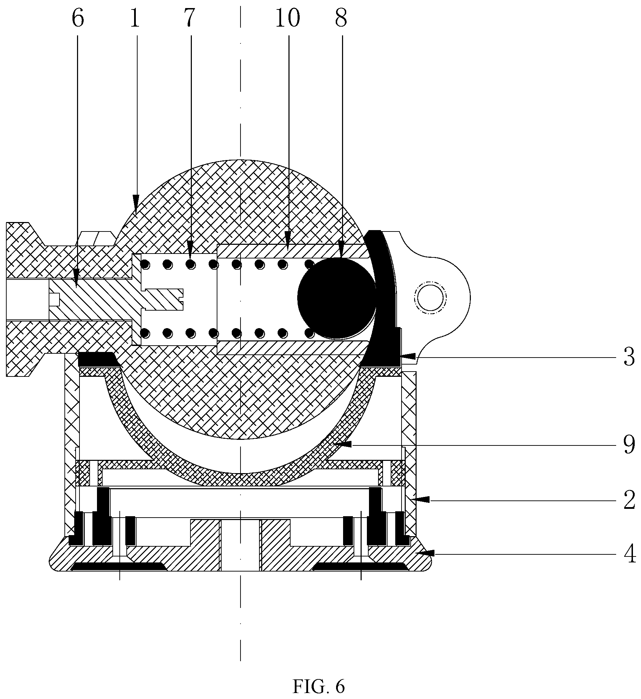

As shown in FIGS. 3 and 6, one side of the upper end of the housing 2 is provided with a U-shaped notch configured to avoid the ball shank of the ball 1. The U-shaped notch facilitates the 90° deflection of the ball 1 relative to the housing 2. Rubber pad 3 is disposed between contact surfaces of the housing 2 and the ball 1. A bottom of the housing 2 is integrated with rotating base 4, and the rotating base 4 is provided with base fixing knob 5.

Since the spring 7 and the abutting member 8 are disposed on the ball 1 and the curved seat 9 is provided with the concave surface mated to the abutting member 8, when the ball 1 is rotated under an external force, rolling contact is formed between the spherical abutting member 8 and the concave surface of the curved seat 9. This ensures rotation smoothness and avoids sticking. On the other hand, the crescent-shaped gap with a deep center and a shallow edge is formed between the concave surface and the outer surface of the ball 1. Thus, the contact pressure between the abutting member 8 and the edge of the concave surface is greater than the contact pressure between the abutting member 8 and the center of the concave surface, thereby increasing the damping resistance during rotation of the ball 1.

When the ball 1 is deflected, the abutting member 8 moves to a shallower side of the gap following the ball 1, and the concave surface of the curved seat 9 forces the abutting member 8 to retract inward and compress the spring 7. Thus, the elastic force of the spring 7 increases, and a rebound force of the ball 1 acting on the curved seat 9 via the spring 7 and the abutting member 8 increases correspondingly, such that the ball 1 tends to reset and fits closely with the housing 2 to increase the friction force between them. A larger deflection angle of the ball 1 leads to greater rebound force and friction force. After an external device such as a camera is mounted on the ball 1 and a corresponding stiffness of the spring 7 is adjusted, the ball 1 can be deflected to any angle and then released. Under the mutual cooperation of the spring 7, the abutting member 8, and the curved seat 9, the rebound force between the ball 1 and the curved seat 9 and the friction force between the ball 1 and the housing 2 balance the gravity of the external device, thereby achieving stable stopping of the ball 1 at any position without locking, and preventing uncontrolled downward tilting of the ball 1 caused by the gravity of external device.

In addition, by skillfully taking the internal space of the ball shank as an adjusting passage and disposing the adjusting member 6 inside the ball shank, no additional adjusting hole needs to be formed in a side or bottom of the ball, which greatly saves radial space and makes the overall structure more compact and attractive. Meanwhile, the opening of the axial through hole is located at the top end of the ball shank, which is less likely to accumulate dust and debris compared with a side opening, and improves the reliability of the internal mechanism.

### Embodiment 3

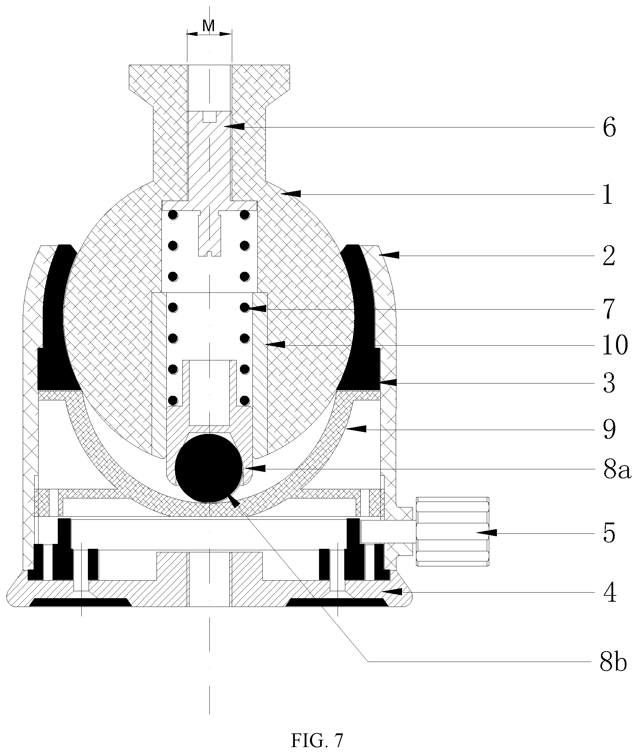

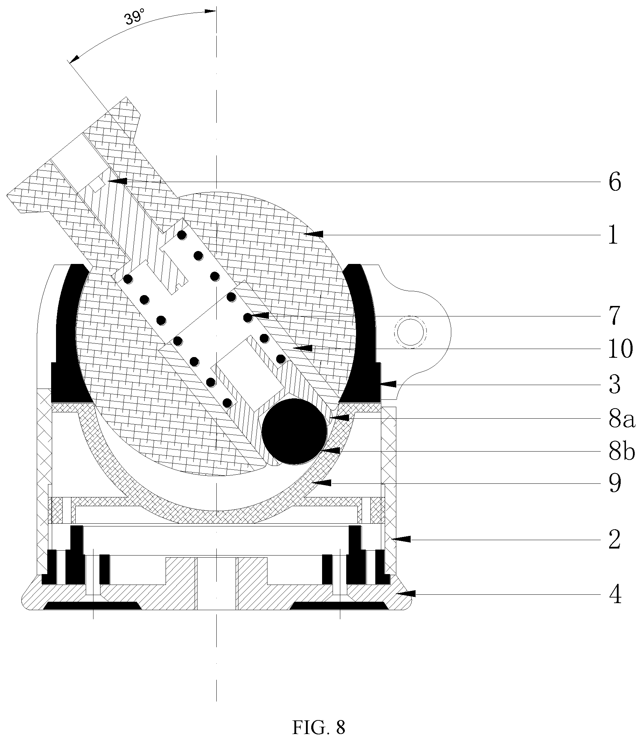

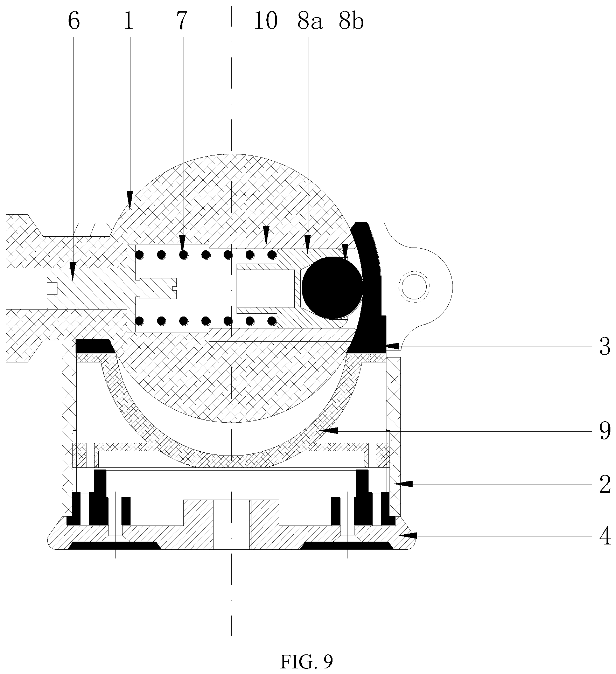

As shown in FIGS. 7 to 9, the inventive concept and overall structure of this embodiment are basically the same as those of Embodiment 1 and Embodiment 2. The difference lies in that the abutting member 8 includes cylindrical member 8a and abutting ball 8b, and the cylindrical member 8a is provided with a groove configured to accommodate the abutting ball 8b. The cylindrical member 8a can better cooperate with the spring 7, and enables the abutting ball 8b to expose more outward relative to the outer surface of the ball 1.

### Embodiment 4

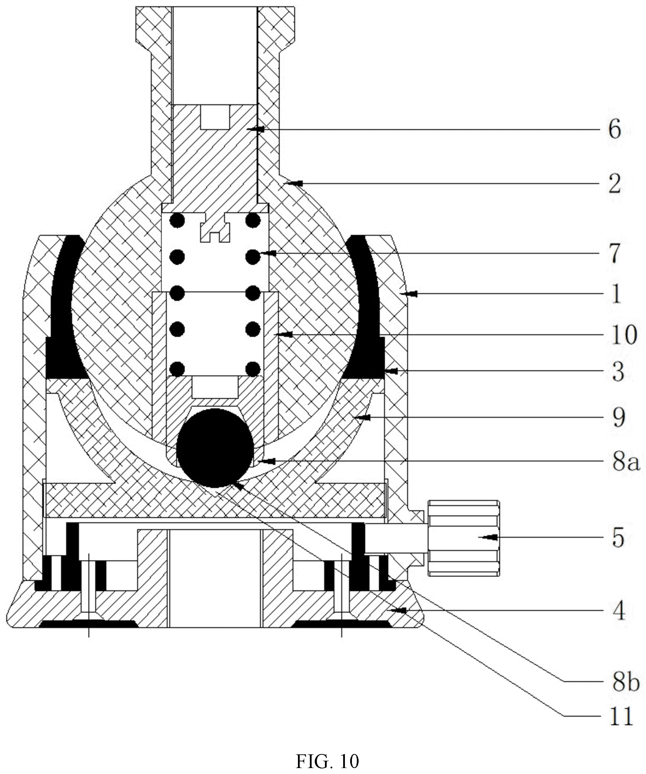

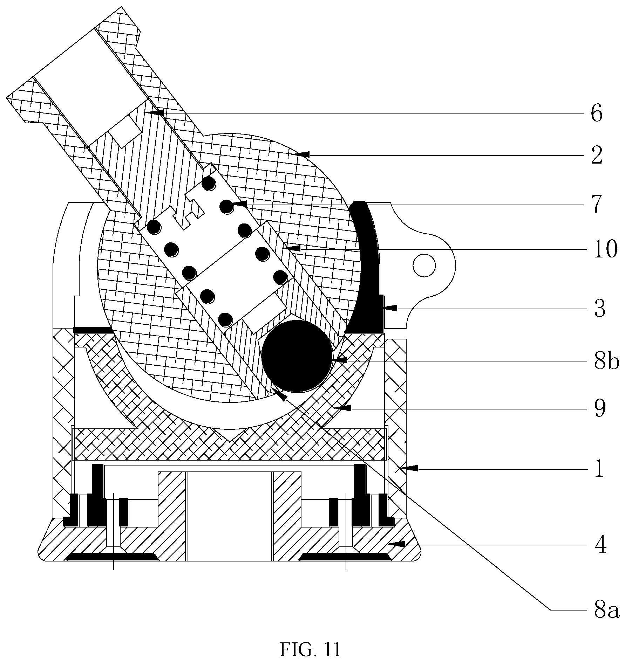

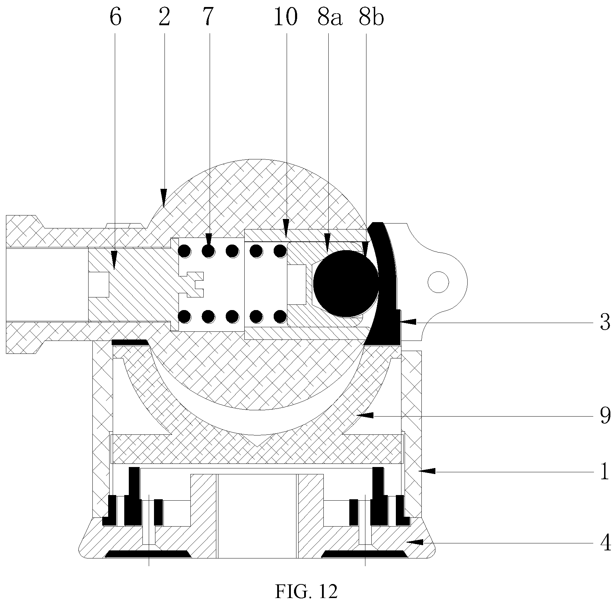

As shown in FIGS. 10 to 12, this embodiment is further optimized on the basis of Embodiment 2 or Embodiment 3. Specifically, the concave surface of the curved seat 9 is provided with central shallow groove 11. The central shallow groove 11 can better guide the abutting member 8, thereby enabling accurate centering of the ball 1.

### Embodiment 5

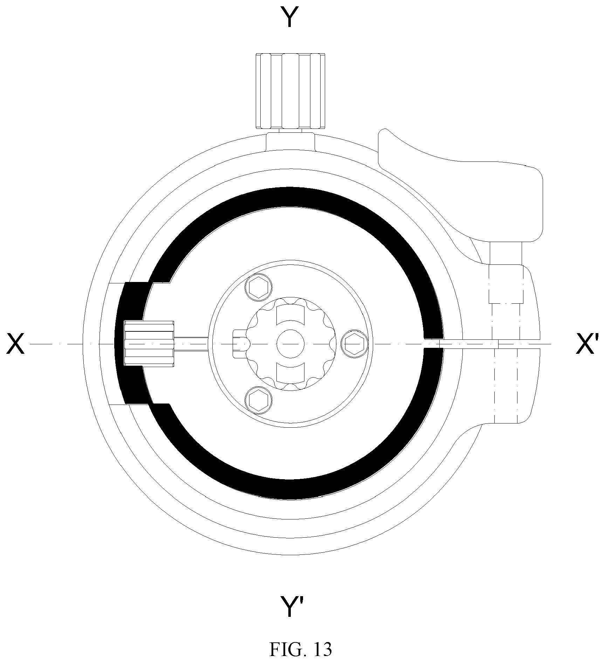

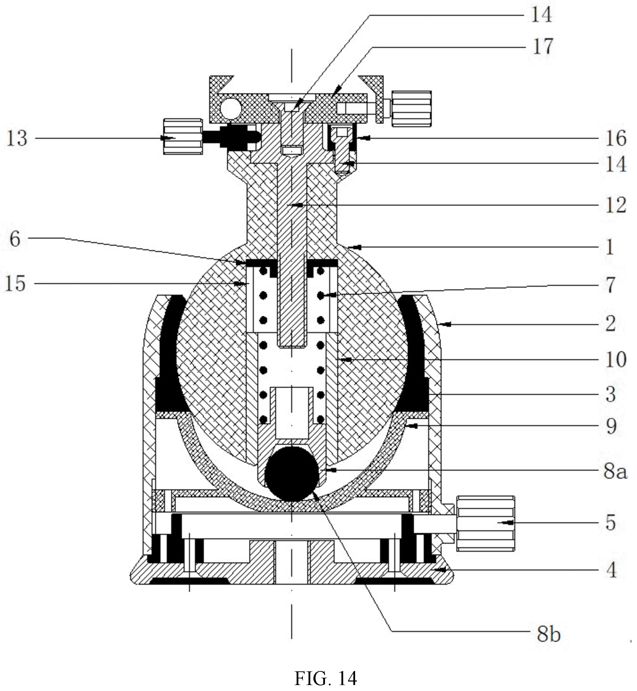

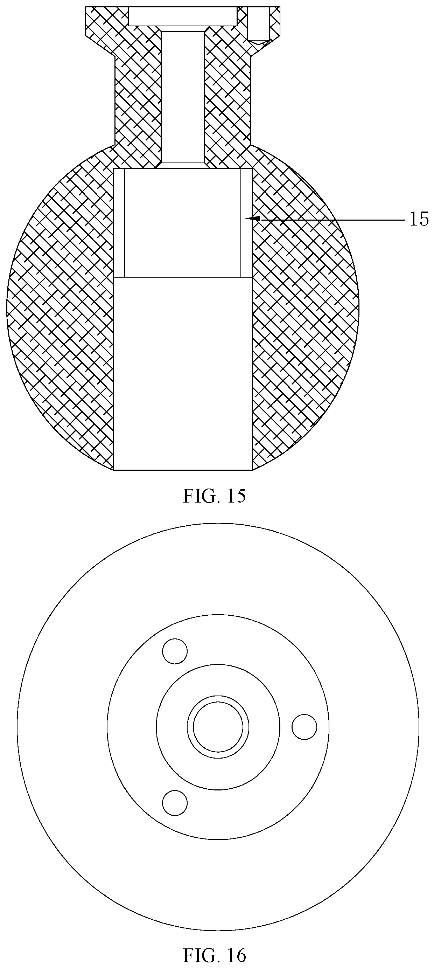

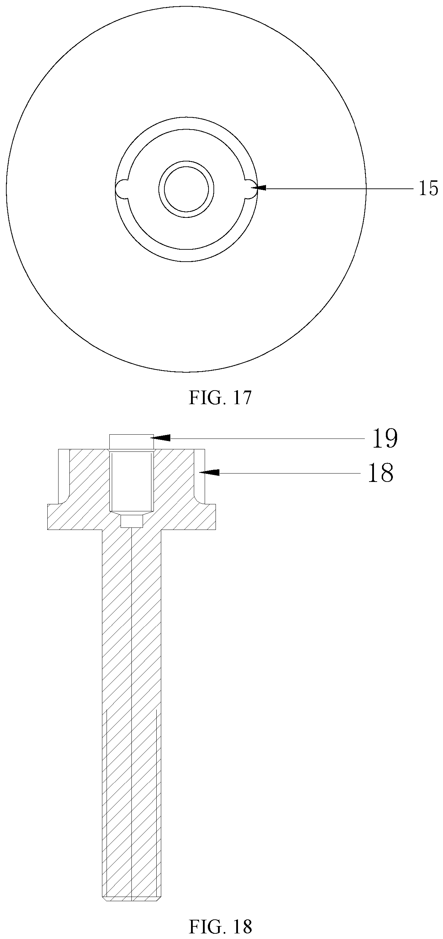

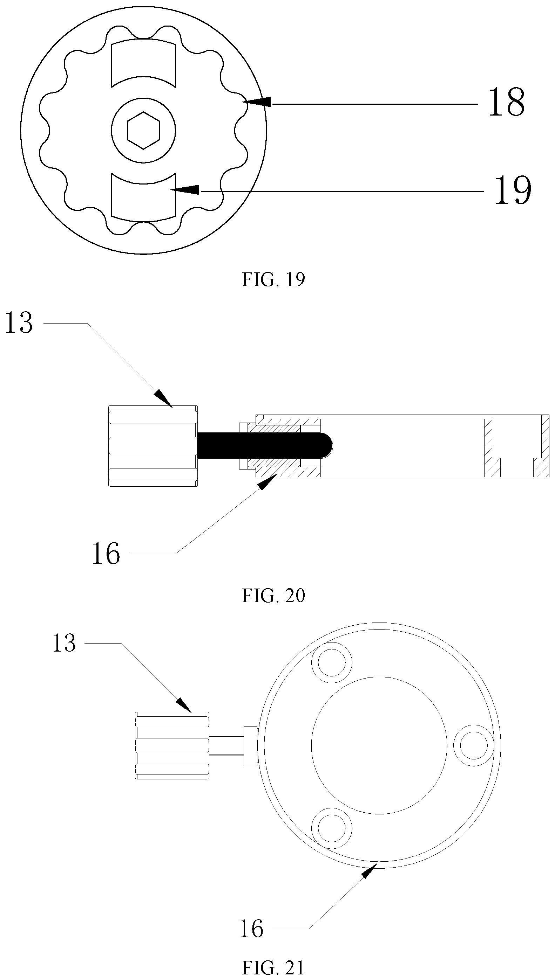

As shown in FIGS. 13 to 21, a ball joint mechanism includes ball 1 and housing 2 configured to accommodate the ball 1. Rubber pad 3 is disposed between the contact surfaces of the housing 2 and the ball 1. An upper portion of the ball 1 is provided with a ball shank. The ball 1 is internally provided with an accommodation chamber coaxial with the ball shank. The accommodation chamber is internally provided with adjusting member 6, spring 7, and abutting member 8 in sequence from top to bottom. Under an elastic force of the spring 7, the abutting member 8 is exposed from an opening of the accommodation chamber to an outer surface of the ball 1. An inner bottom of the housing 2 is provided with curved seat 9. The curved seat 9 is provided with a concave surface in contact with and mated to the abutting member 8. A non-uniform gap is formed between the concave surface and the outer surface of the ball 1, which forms a crescent-shaped gap gradually narrowing from a center to a peripheral edge. When the ball 1 is deflected to different angles, under the dual action of the concave surface of the curved seat 9 and the spring 7, an exposure amount of the abutting member 8 protruding from the outer surface of the ball 1 varies, resulting in different damping forces. The ball shank is provided with an axial through hole connected to the accommodation chamber. The axial through hole is internally provided with adjusting rod 12. The adjusting rod 12 is provided with a head portion and a rod portion. The head portion of the adjusting rod 12 protrudes from an end surface of the ball shank. The end surface of the ball shank is provided with fixing cover 16 configured to cover the head portion of the adjusting rod 12. The fixing cover 16 limits axial movement of the adjusting rod 12 via screw 14 connected to the ball shank. An outer periphery of the fixing cover 16 is provided with a radial threaded hole and limit screw 13 to lock the circumferential rotation of the adjusting rod 12. A circumferential surface of the head portion of the adjusting rod 12 is provided with a ring of epicycloidal teeth 18 corresponding to the limit screw 13. An upper end surface of the head portion of the adjusting rod 12 is provided with a threaded hole configured to mount a quick-release plate seat 17. The upper end surface of the head portion of the adjusting rod 12 is further provided with limiting protrusion 19 mated to a bottom groove of the quick-release plate seat 17. The screw 14 passes through a counterbore of the quick-release plate seat 17 and is screwed into the threaded hole in the head portion of the adjusting rod 12, so as to fix the quick-release plate seat 17 to the upper end surface of the head portion of the adjusting rod 12. The rod portion of the adjusting rod 12 passes through the axial through hole and is threadedly connected to the adjusting member 6. A circumferential limiting structure is disposed between the adjusting member 6 and the accommodation chamber. When the adjusting rod 12 is rotated, the adjusting member 6 is movable linearly up and down inside the accommodation chamber. Specifically, the circumferential limiting structure includes axial groove 15 disposed in a wall of an inner section of the accommodation chamber and a protruding portion disposed on the adjusting member 6. A bottom of the housing 2 is integrated with rotating base 4, and the rotating base 4 is provided with base fixing knob 5.

Since the spring 7 and the abutting member 8 are disposed on the ball 1 and the curved seat 9 is provided with the concave surface mated to the abutting member 8, when the ball 1 is rotated under an external force, rolling contact is formed between the abutting member 8 and the concave surface of the curved seat 9, which ensures rotation smoothness and avoids sticking. On the other hand, the crescent-shaped gap with a deep center and a shallow edge is formed between the concave surface and the outer surface of the ball 1. Thus, the contact pressure between the abutting member 8 and the edge of the concave surface is greater than the contact pressure between the abutting member 8 and the center of the concave surface. When the ball 1 is deflected to different angles, the contact position between the abutting member 8 and the concave surface of the curved seat 9 changes, the exposure amount of the abutting member 8 relative to the outer surface of the ball 1 changes accordingly, and the compression amount of the spring 7 varies. Therefore, the elastic force generated by the spring 7 dynamically increases or decreases with the change of the deflection angle of the ball 1, such that the rebound force and friction force of the ball 1 during deflection change dynamically. When it is necessary to adjust the damping force, only the limit screw 13 needs to be loosened, and then the quick-release plate seat 17 is held for circumferential rotation to drive the adjusting rod 12 to rotate. Since the adjusting rod 12 is threadedly connected to the adjusting member 6 and the circumferential limiting structure is disposed between the adjusting member 6 and the accommodation chamber, the adjusting member 6 cannot rotate and can only move upward or downward in a straight line when the adjusting rod 12 rotates, thereby changing the elastic force of the spring 7.

The abutting member includes cylindrical member 8a and abutting ball 8b, and the cylindrical member 8a is provided with a groove configured to accommodate the abutting ball 8b. The cylindrical member 8a can better cooperate with the spring 7, and enables the abutting ball 8b to expose more outward relative to the outer surface of the ball 1. An outer section of the accommodation chamber is provided with guide sleeve 10, and the abutting member 8 is slidably disposed inside the guide sleeve 10. The guide sleeve 10 improves surface smoothness and wear resistance. One side of the upper end of the housing 2 is provided with a U-shaped notch configured to avoid the ball shank of the ball 1. The U-shaped notch facilitates the 90° deflection of the ball 1 relative to the housing 2. A bottom of the housing 2 is integrated with rotating base 4, and the rotating base 4 is provided with base fixing knob 5.

### Embodiment 6

A ball head includes the ball joint mechanism according to the above embodiments. Since the technical effects of the ball head provided by this embodiment are the same as those of the ball joint mechanism provided by the above embodiments, redundant descriptions are omitted herein.

In summary, after reading the detailed specification of the present disclosure, those skilled in the art can understand that the foregoing detailed disclosure may be presented by way of example only, and may not be limited. Although there is no clear description, those skilled in the art can understand that the present disclosure intends to cover various reasonable changes, improvements, and modifications of the embodiments. These changes, improvements, and modifications are intended to be proposed in the present disclosure and are within the spirit and scope of the exemplary embodiments of the present disclosure.

## Claims

1. A ball joint mechanism, comprising: a ball (1) and a housing (2) configured to accommodate the ball (1), wherein the ball (1) is internally provided with an accommodation chamber extending axially; the accommodation chamber is internally provided with an adjusting member (6), a spring (7), and an abutting member (8) in sequence from top to bottom; under an elastic force of the spring (7), the abutting member (8) is exposed from an opening of the accommodation chamber to an outer surface of the ball (1); an inner bottom of the housing (2) is provided with a curved seat (9); the curved seat (9) is provided with a concave surface in contact with and mated to the abutting member (8); and the concave surface and the outer surface of the ball (1) enclose a crescent-shaped gap that gradually narrows from a center to a peripheral edge.

2. The ball joint mechanism according to claim 1, wherein the abutting member (8) is cylindrical in a circumferential direction, and an end surface of an exposed end of the abutting member (8) is a spherical surface.

3. The ball joint mechanism according to claim 1, wherein the abutting member (8) is spherical; or
the abutting member (8) comprises a cylindrical member (8a) and an abutting ball (8b), and the cylindrical member (8a) is provided with a groove configured to accommodate the abutting ball (8b).

4. The ball joint mechanism according to claim 3, wherein the concave surface is provided with a central shallow groove (11).

5. The ball joint mechanism according to claim 1, wherein the accommodation chamber is internally provided with a guide sleeve (10), and the abutting member (8) is slidably disposed inside the guide sleeve (10).

6. The ball joint mechanism according to claim 1, wherein an upper portion of the ball (1) is provided with a ball shank; the ball shank is provided with an axial through hole; and one end of the axial through hole is open at a top end of the ball shank, and the other end of the axial through hole is connected to the accommodation chamber, such that an external adjusting tool is allowed to enter the axial through hole to operate the adjusting member (6).

7. The ball joint mechanism according to claim 1, wherein an upper portion of the ball (1) is provided with a ball shank; the ball shank is provided with an axial through hole connected to the accommodation chamber; the axial through hole is internally provided with an adjusting rod (12); the adjusting rod (12) is provided with a head portion and a rod portion; the head portion of the adjusting rod (12) protrudes from an end surface of the ball shank; the end surface of the ball shank is provided with a fixing cover (16) configured to cover the head portion of the adjusting rod (12); the fixing cover (16) limits axial movement of the adjusting rod (12) via a screw (14) connected to the ball shank; an outer periphery of the fixing cover (16) is provided with a radial threaded hole and a limit screw (13) to lock circumferential rotation of the adjusting rod (12); an upper end surface of the head portion of the adjusting rod (12) is provided with a threaded hole for mounting a quick-release plate seat (17); the rod portion of the adjusting rod (12) passes through the axial through hole and is threadedly connected to the adjusting member (6); a circumferential limiting structure is disposed between the adjusting member (6) and the accommodation chamber; and the adjusting member (6) is movable linearly up and down in the accommodation chamber when the adjusting rod (12) is rotated.

8. The ball joint mechanism according to claim 1, wherein a side of an upper end of the housing (2) is provided with a U-shaped notch configured to avoid the ball (1), and a rubber pad (3) is disposed between contact surfaces of the housing (2) and the ball (1).

9. The ball joint mechanism according to claim **1,** wherein a bottom of the housing (2) is integrated with a rotating base (4) and a base fixing knob (5).

10. A ball head, comprising the ball joint mechanism according to claim 1.
